# EUROPÄISCHE PATENTSCHRIFT

(11) **EP 2 654 115 B1**
(45) Veröffentlichungstag und Bekanntmachung des Hinweises auf die Patenterteilung: **23.11.2016**
(21) Anmeldenummer: 13163187.1
(22) Anmeldetag: 10.04.2013
(51) Int. Cl.: H01M 8/02, H01M 8/12, H01M 4/86, H01M 4/88, H01M 4/90

(54) **Verfahren zur Herstellung eines Trägersubstrats, Trägersubstrat und elektrochemische Einrichtung**
Method for producing a carrier substrate, carrier substrate and electrochemical device
Procédé de fabrication d'un substrat de support, substrat de support et dispositif électrochimique

(30) Priorität: 18.04.2012 DE 102012103383
(43) Veröffentlichungstag der Anmeldung: 23.10.2013
(73) Patentinhaber: Deutsches Zentrum für Luft- und Raumfahrt e.V., 51147 Köln (DE)
(72) Erfinder: Ansar, Syed Asif, 22657 Lund (SE); Costa, Rémi, 70182 Stuttgart (DE)
(74) Vertreter: Hoeger, Stellrecht & Partner Patentanwälte mbB

(56) Entgegenhaltungen:
- EP-A1- 0 423 448
- EP-A1- 0 788 175
- EP-A2- 1 376 727
- WO-A1-01/09968
- WO-A1-01/57945
- WO-A1-99/27599
- WO-A1-2006/136257
- WO-A2-02/101859
- DE-A1-102007 024 225
- US-A- 4 510 034

## Beschreibung

Die vorliegende Erfindung betrifft ein Verfahren zur Herstellung eines Trägersubstrats für eine elektrochemische Einrichtung.

Eine elektrochemische Einrichtung ist beispielsweise eine Hochtemperatur-Brennstoffzellenvorrichtung. Ein stabiles Brennstoffzellenmodul einer solchen Hochtemperatur-Brennstoffzeftenvorrichtuhg kann insbesondere dadurch erhalten werden, dass ein stabiles Trägersubstrat verwendet wird, auf welches die Anode, die Elektrolytschicht und/oder die Kathode des Brennstoffzellenmoduls aufgebracht werden.

Die WO 02/101859 A2, die WO 01/57945 A1, die WO 2006/136257 A1, die WO 01/09968 A1, die EP 0 788 175 A1, die EP 0 423 448 A1, die EP 1 376 727 A2, die DE 10 2007 024 225 A1, die WO 99/27599 A1 und die US 4,510,034 A offenbaren verschiedene Schichten von elektrochemischen Einrichtungen sowie Verfahren zur Herstellung derselben.

Der vorliegenden Erfindung liegt die Aufgabe zugrunde, ein Verfahren zur Herstellung eines Trägersubstrats für eine elektrochemische Einrichtung bereitzustellen, mittels welchem ein stabil ausgebildetes Trägersubstrat, welches eine hohe Elektronenleitfähigkeit aufweist, herstellbar ist.

Diese Aufgabe wird erfindungsgemäß durch ein Verfahren gemäß Anspruch 1 gelöst.

Dadurch, dass bei dem Verfahren zur Herstellung eines Trägersubstrats ein offenporiges und fluiddurchlässiges Trägermaterial mit einer Schutzschicht und mit einer elektronenleitfähigen Struktur versehen wird, kann ein stabil ausgebildetes Trägersubstrat hergestellt werden, welches eine hohe Elektronenleitfähigkeit aufweist.

Die innere Oberfläche des Trägermaterials wird teilweise oder im Wesentlichen vollständig mit einer Schutzschicht versehen.

Es kann ferner vorgesehen sein, dass die innere Oberfläche des Trägermaterials mit mehreren Schutzschichten versehen wird.

Vorzugsweise ist auch nach der Herstellung des Trägersubstrats, das heißt nach der Durchführung des erfindungsgemäßen Verfahrens, das Trägersubstrat selbst noch immer offenporig und fluiddurchlässig.

Günstig kann es sein, wenn das Trägermaterial ein oxidbildendes Material ist.

Die Schutzschicht wird vorzugsweise an der den mindestens einen Hohlraum begrenzenden inneren Oberfläche des Trägermaterials durch oberflächliche Oxidation des Trägermaterials hergestellt.

Insbesondere kann hierbei vorgesehen sein, dass das Trägermaterial unter Wärmezufuhr einer oxidierenden Atmosphäre ausgesetzt wird.

Das Trägermaterial umfasst Aluminium.

Die Schutzschicht wird aus Aluminiumoxid gebildet.

Insbesondere kann vorgesehen sein, dass ein Aluminium umfassendes Trägermaterial vorgesehen ist, welches zur Ausbildung der Schutzschicht an der den mindestens einen Hohlraum begrenzenden inneren Oberfläche des Trägermaterials in einer Atmosphäre, welche Sauerstoff umfasst, erhitzt wird.

Das Trägermaterial wird vorzugsweise so gewählt, dass sich eine ausbildende Schutzschicht lediglich im Bereich der Oberfläche des Trägermaterials bildet und auch bei Zufuhr weiterer oxidierender Stoffe bei hohen Temperaturen keine vollständige Oxidation des Trägermaterials zu befürchten ist.

Das Trägermaterial kann beispielsweise aus einem Metallschaum gebildet sein.

Alternativ oder ergänzend hierzu kann vorgesehen sein, dass das Trägermaterial ein gesintertes Material ist.

Als Trägermaterial kann insbesondere eine Aluminiumlegierung, beispielsweise eine Legierung aus Eisen, Chrom, Aluminium und Yttrium (Fe-Cr-Al-Y), verwendet werden.

Der Aluminiumgehalt des Trägermaterials beträgt bezogen auf die Gesamtmasse vorzugsweise zwischen ungefähr 1% und ungefähr 20%, insbesondere zwischen ungefähr 3% und ungefähr 7%, beispielsweise ungefähr 5%.

Ferner kann vorgesehen sein, dass das Trägermaterial Stahl, eine Titan-Aluminium-Legierung und/oder eine Nickel-Chrom-Aluminium-Yttrium-Legierung (Ni-Cr-Al-Y) umfasst oder aus Stahl, einer Titan-Aluminium-Legierung oder einer Nickel-Chrom-Aluminium-Yttrium-Legierung (Ni-Cr-Al-Y) gebildet ist.

Bei einer Ausgestaltung der Erfindung ist vorgesehen, dass die Schutzschicht vor der Herstellung der elektronenleitfähigen Struktur hergestellt wird.

Die elektronenleitfähige Struktur umfasst vorzugsweise ein keramisches Material oder ist aus einem keramischen Material gebildet.

Insbesondere kann vorgesehen sein, dass das keramische Material Lanthan-Strontium-Chrom-Manganat (LSCM) und/oder Lanthan-Strontium-Titanat (LST) umfasst oder aus Lanthan-Strontium-Chrom-Manganat (LSCM) oder Lanthan-Strontium-Titanat (LST) gebildet ist.

Beispielsweise kann vorgesehen sein, dass die elektronenleitfähige Struktur aus La₁₋ₓSrₓCr_{1-y}Mn_{y}O_{3-d} gebildet ist.

Günstig kann es sein, wenn der mindestens eine Hohlraum in dem Trägermaterial zur Herstellung der elektronenleitfähigen Struktur zumindest teilweise mit einem Füllmaterial gefüllt wird.

Ferner kann vorgesehen sein, dass das Trägermaterial zusammen mit dem Füllmaterial zur Herstellung der elektronenleitfähigen Struktur erhitzt, insbesondere gesintert, wird.

Besonders vorteilhaft kann es sein, wenn die elektronenleitfähige Struktur und/oder die Schutzschicht dadurch hergestellt wird, dass der mindestens eine Hohlraum in dem Trägermaterial zumindest teilweise mit einem Füllmaterial gefüllt wird und dass das Trägermaterial anschließend zusammen mit dem Füllmaterial erhitzt wird.

Günstig kann es sein, wenn das Trägersubstrat
- vor der Herstellung, nach der Herstellung und/oder zur Herstellung des offenporigen und fluiddurchlässigen Trägermaterials,
- vor der Herstellung, nach der Herstellung und/oder zur Herstellung der Schutzschicht und/oder
- vor der Herstellung, nach der Herstellung und/oder zur Herstellung der elektronenleitfähigen Struktur
   gesintert wird.

Unter einem Trägersubstrat ist dabei auch eine Vorstufe des Trägersubstrats bei dessen Herstellung zu verstehen.

Günstig kann es sein, wenn mindestens ein Verfahrensschritt zur Herstellung des Trägersubstrats durchgeführt wird, während das Trägersubstrat oder eine Vorstufe des Trägersubstrats auf einer ebenen Oberfläche mit geringer Rauheit angeordnet ist. Auf diese Weise kann eine Außenseite des Trägersubstrats mit einer glatten Oberfläche hergestellt werden. Die auf das Trägersubstrat aufzubringenden Schichten, insbesondere die Anode, die Elektrolytschicht und/oder die Kathode, können dann besonders einfach und gleichmäßig auf das Trägersubstrat aufgebracht werden.

Mittels des erfindungsgemäßen Verfahrens ist vorzugsweise ein innenbeschichtetes Trägermaterial herstellbar.

Die Schutzschicht des Trägersubstrats dient vorzugsweise dazu, die thermischen und/oder chemischen Belastungen des Trägermaterials im Betrieb der elektrochemischen Einrichtung zu reduzieren.

Aufgrund der Schutzschicht kommt ein im Betrieb der elektrochemischen Einrichtung durch das Trägersubstrat strömendes Fluid vorzugsweise nicht mit dem Trägermaterial in direkten Kontakt

Das Trägermaterial selbst dient vorzugsweise lediglich der Gewährleistung der Stabilität der elektrochemischen Einrichtung, insbesondere einer an dem Trägersubstrat angeordneten oder anzuordnenden Hochtemperatur-Elektrolytschicht.

Die Schutzschicht ist vorzugsweise im Wesentlichen geschlossen, ununterbrochen und/oder lückenlos ausgebildet.

Die vorliegende Erfindung betrifft ferner ein Trägersubstrat für eine elektrochemische Einrichtung.

Der Erfindung liegt diesbezüglich die Aufgabe zugrunde, ein stabiles Trägersubstrat mit einer hohen Elektronenleitfähigkeit bereitzustellen.

Diese Aufgabe wird erfindungsgemäß durch ein Trägersubstrat gemäß Anspruch 7 gelöst.

Das erfindungsgemäße Trägersubstrat weist vorzugsweise einzelne oder mehrere der im Zusammenhang mit dem erfindungsgemäßen Verfahren beschriebenen Merkmale und/oder Vorteile auf.

Vorzugsweise ist das Trägersubstrat selbst offenporig und fluiddurchlässig ausgebildet.

Die innere Oberfläche des Trägermaterials ist zum Schutz desselben vorzugsweise im Wesentlichen vollständig mit mindestens einer Schutzschicht versehen.

Günstig kann es sein, wenn die elektronenleitfähige Struktur eine im Wesentlichen zusammenhängende Struktur ist, mittels welcher Elektronen von einer ersten Außenseite des Trägersubstrats zu einer der ersten Außenseite gegenüberliegenden zweiten Außenseite des Trägersubstrats leitbar sind.

Die elektronenleitfähige Struktur erstreckt sich somit vorzugsweise zumindest näherungsweise von einer ersten Außenseite des Trägersubstrats zu einer der ersten Außenseite gegenüberliegenden zweiten Außenseite des Trägersubstrats.

Bei einer Ausgestaltung der Erfindung ist vorgesehen, dass das Trägersubstrat durch den mindestens einen Hohlraum hindurch und/oder längs der elektronenleitfähigen Struktur von einer ersten Außenseite des Trägersubstrats zu einer der ersten Außenseite gegenüberliegenden zweiten Außenseite des Trägersubstrats mit einem Fluid durchströmbar ist.

Insbesondere um mechanische Spannungen innerhalb des Trägersubstrats bei hohen Temperaturen zu vermeiden, kann vorgesehen sein, dass der thermische Expansionskoeffizient des Trägermaterials, der thermische Expansionskoeffizient der Schutzschicht und/oder der thermische Expansionskoeffizient der elektronenleitfähigen Struktur zumindest näherungsweise identisch sind.

Insbesondere kann hierbei vorgesehen sein, dass der thermische Expansionskoeffizient des Trägermaterials, der thermische Expansionskoeffizient der Schutzschicht und/oder der thermische Expansionskoeffizient der elektronenleitfähigen Struktur um höchstens ungefähr 50%, insbesondere um höchstens ungefähr 30%, beispielsweise um höchstens ungefähr 10%, voneinander abweichen.

Das erfindungsgemäße Trägersubstrat eignet sich insbesondere zur Verwendung in einer elektrochemischen Einrichtung.

Die vorliegende Erfindung betrifft daher auch eine elektrochemische Einrichtung, welche ein erfindungsgemäßes Trägersubstrat umfasst.

Die elektrochemische Einrichtung weist dabei vorzugsweise einzelne oder mehrere der im Zusammenhang mit dem erfindungsgemäßen Verfahren und/oder dem erfindungsgemäßen Trägersubstrat beschriebenen Merkmale und/oder Vorteile auf.

Günstig kann es sein, wenn das Trägersubstrat auf einer Außenseite desselben mit einer Schicht versehen ist, welche im Wesentlichen aus demselben Material gebildet ist wie die elektronenleitfähige Struktur des Trägersubstrats.

Insbesondere kann hierbei vorgesehen sein, dass die Schicht eine Hochtemperatur-Elektrolytschicht aus einem gemischten Ionen- und Elektronenleiter (Mixed Ionic and Electronic Conductor MIEC) gebildet ist. Beispielsweise kann vorgesehen sein, dass die Hochtemperatur-Elektrolytschicht aus Lanthan-Strontium-Chrom-Manganat (LSCM) oder aus Lanthan-Strontium-Titanat (LST) gebildet ist.

Die Schicht, welche unmittelbar auf die Außenseite des Trägersubstrats aufgebracht ist, ist vorzugsweise eine Anodenschicht der elektrochemischen Einrichtung.

Bei einer Ausgestaltung der Erfindung ist vorgesehen, dass die elektrochemische Einrichtung als eine Hochtemperatur-Brennstoffzellenvorrichtung ausgebildet ist.

Eine Hochtemperatur-Brennstoffzellenvorrichtung wird auch als Solid Oxide Fuel Cell (SOFC) bezeichnet.

Ferner können das erfindungsgemäße Verfahren, das erfindungsgemäße Trägersubstrat und/oder die erfindungsgemäße elektrochemische Einrichtung einzelne oder mehrere der nachfolgend beschriebenen Merkmale und/oder Vorteile aufweisen:
Vorteilhaft kann es sein, wenn das Trägermaterial im Wesentlichen plattenförmig ausgebildet ist. Auf diese Weise kann ein besonders einfach stapelbares Trägersubstrat zur Ausbildung eines Stacks von Brennstoffzellenmodulen hergestellt werden.

Unter "plattenförmig" ist dabei insbesondere eine Form zu verstehen, bei welcher mindestens zwei parallel zueinander verlaufende, im Wesentlichen flache Oberflächen vorgesehen sind, wobei ein Abstand zwischen den beiden Oberflächen eine Materialstärke, das heißt eine Dicke, insbesondere eine mittlere Dicke, bezeichnet und dieser Abstand in Bezug auf eine Breite und eine Länge der Form relativ klein ausfällt.

Die Schutzschicht kann beispielsweise in einem Chemical Vapor Deposition-Verfahren (CVD), einem Electrochemical Vapor Deposition-Verfahren (EVD), einem Sputter-Verfahren, einem Sol Gel-Verfahren, einem Eintauchverfahren, einem Infiltrationsverfahren und/oder einem galvanischen Verfahren hergestellt werden.

Grundsätzlich können für die Herstellung der Schutzschicht und für die Herstellung der elektronenleitfähigen Struktur dasselbe Verfahren oder voneinander verschiedene Verfahren vorgesehen sein.

Das erfindungsgemäße Trägersubstrat kann vorzugsweise auch bei hohen Temperaturen, insbesondere bei Temperaturen zwischen ungefähr 800°C und ungefähr 1000°C, verwendet werden.

Vorteilhaft kann es jedoch auch sein, das erfindungsgemäße Trägersubstrat bei Temperaturen zwischen ungefähr 500°C und ungefähr 800°C zu verwenden.

Günstig kann es sein, wenn das Trägermaterial ein poröses Material aus einer Legierung ist, beispielsweise durch einen Metallschaum gebildet ist.

Die Zusammensetzung des Trägermaterials ermöglicht vorzugsweise die Ausbildung einer Aluminiumoxidschicht, wobei die thermischen Ausdehnungskoeffizienten des Trägermaterials, der Schutzschicht und/oder der aktiven Schichten (Anode, Elektrolytschicht, Kathode) vorzugsweise aufeinander abgestimmt sind.

Die Schutzschicht kann vor einer Montage der elektrochemischen Einrichtung oder auch erst im Betrieb der elektrochemischen Einrichtung gebildet werden.

Die elektronenleitfähige Struktur dient vorzugsweise nicht der Stabilisierung des Trägersubstrats in mechanischer Hinsicht.

Die elektronenleitfähige Struktur kann beispielsweise dadurch ausgebildet werden, dass der mindestens eine Hohlraum, vorzugsweise sämtliche Hohlräume, in dem Trägermaterial mit einer Schlämme (auch slurry genannt) gefüllt wird. Mittels eines anschließenden Sinterschrittes wird vorzugsweise die elektronenleitfähige Struktur, welche insbesondere eine dreidimensionale Struktur ist, ausgebildet.

Auf das Trägersubstrat werden vorzugsweise weitere Schichten aufgebracht, nämlich:
- eine Anodenschicht aus einem gemischten ionischen und elektronischen Leiter, beispielsweise aus Lanthan-Strontium-Chrom-Manganat (LSCM) oder aus Lanthan-Strontium-Titanat (LST);
- eine Elektrolytschicht, welche aus einem Ionen leitenden keramischen Material gebildet ist, das bereits bei moderaten Temperaturen von ungefähr 500°C bis ungefähr 800°C eine hohe Ionenleitfähigkeit aufweist, beispielsweise Yttriumoxid stabilisiertes Zirkoniumoxid (YSZ) oder Scandiumoxid stabilisiertes Zirkoniumoxid (SSZ);
- eine Zwischenschicht zwischen der Elektrolytschicht und der Kathode; und/oder
- eine Kathodenschicht, welche aus einem reinen gemischten ionischen und elektronischen Leiter (MIEC) oder einem Verbund aus mindestens zwei keramischen Materialien gebildet ist, beispielsweise aus einem gemischten ionischen oder elektronischen Leiter und einem Sauerstoffionen leitenden Material. Insbesondere können hierbei Materialien des Typs Perowskit, wie beispielsweise Cobalt dotiertes Lanthan-Strontium-Ferrit oder andere Strukturen wie Ln₂NiO₄ vorgesehen sein.

Ein katalytisches Material kann einer aktiven Schicht zugeführt werden, um die elektrochemische Aktivität oder eine Toleranz gegen Verunreinigungen, insbesondere Verunreinigungen durch Schwefel, zu erhöhen.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Figur 1: eine schematische Schnittdarstellung einer Hochtemperatur-Brennstoffzellenvorrichtung;
- Figur 2: eine vergrößerte Darstellung der Schichtbildung der Hochtemperatur-Brennstoffzellenvorrichtung in dem Bereich I aus Figur 1;
- Figur 3: eine schematische Schnittdarstellung eines Trägersubstrats für eine Elektrolytschicht der Hochtemperatur-Brennstoffzellenvorrichtung;
- Figur 4: eine schematische Schnittdarstellung des Trägersubstrats mit darauf angeordneter Anodenschicht, Elektrolytschicht, Zwischenschicht und Kathodenschicht; und
- Figur 5: eine schematische Schnittdarstellung einer alternativen Ausführungsform des Trägersubstrats.

Gleiche oder funktional äquivalente Elemente sind in sämtlichen Figuren mit denselben Bezugszeichen versehen.

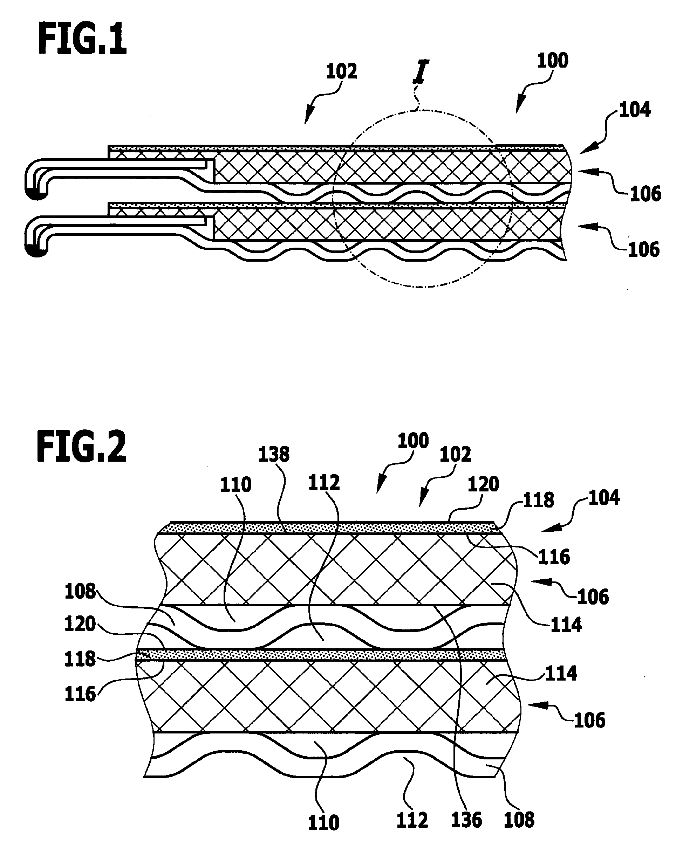

Eine in den Figuren 1 und 2 dargestellte, als Ganzes mit 100 bezeichnete elektrochemische Einrichtung ist als eine Hochtemperatur-Brennstoffzellenvorrichtung 102 ausgebildet und umfasst als solche einen Stack 104 einer Vielzahl von Brennstoffzellenmodulen 106.

Wie insbesondere Figur 2 zu entnehmen ist, ist jedes Brennstoffzellenmodul 106 aus mehreren Schichten/Lagen aufgebaut.

Eine Lage ist dabei aus einer fluidundurchlässigen Verteilervorrichtung 108 gebildet, mittels welcher dem Brennstoffzellenmodul 106 ein Oxidator und ein Brennstoff zuführbar sind und mittels welcher der Oxidator und der Brennstoff innerhalb des Brennstoffzellenmoduls 106 verteilt werden können.

Die Verteilervorrichtung 108 kann einen wellenförmigen Querschnitt aufweisen, so dass obere Kanäle 110 und untere Kanäle 112 der Verteilervorrichtung 108 gebildet sind.

Mittels der oberen Kanäle 110 der Verteilervorrichtung 108 ist dem Brennstoffzellenmodul 106 Brennstoff zuführbar.

Mittels der unteren Kanäle 112 der Verteilervorrichtung 108 ist dem Brennstoffzellenmodul 106 ein Oxidator zuführbar.

Die Verteilervorrichtung 108 ist mit einem Trägersubstrat 114 beispielsweise mittels einer Lötverbindung verbunden. Das Trägersubstrat 114 ist vorzugsweise ein metallisches Substrat, welches die Stabilität des Brennstoffzellenmoduls 106 gewährleistet und offenporig ausgebildet ist, so dass der den oberen Kanälen 110 der Verteilervorrichtung 108 zugeführte Brennstoff durch das Trägersubstrat 114 hindurchströmen kann.

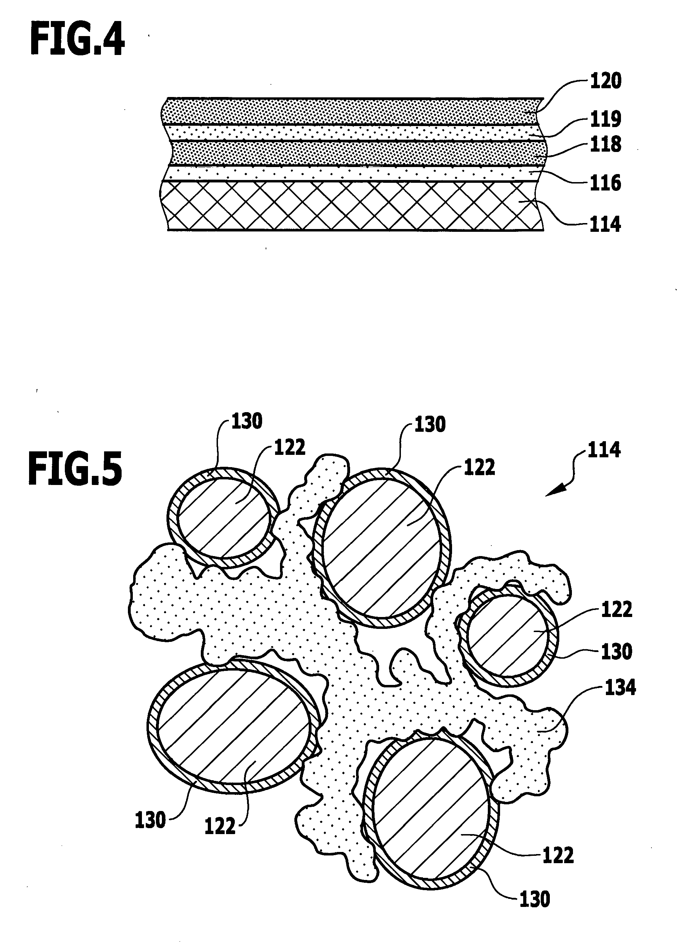

Auf der der Verteilervorrichtung 108 abgewandten Seite des Trägersubstrats 114 ist das Trägersubstrat 114 mit einer Elektrode versehen, welche eine Anode 116 der elektrochemischen Einrichtung 100 bildet (siehe Figur 4).

Auf der Anode 116 wiederum ist eine Elektrolytschicht 118 angeordnet.

Die Elektrolytschicht 118 ist beispielsweise eine keramische Yttriumoxid-stabilisierte Zirkoniumdioxid-Schicht, welche elektronisch isolierend ausgebildet ist, jedoch die Leitung von Sauerstoffionen ermöglicht.

Auf der der Anode 116 abgewandten Seite der Elektrolytschicht 118 ist eine Zwischenschicht 119 und darauf eine Kathode 120 des Brennstoffzellenmoduls 106 angeordnet, welche im montierten Zustand der Hochtemperatur-Brennstoffzellenvorrichtung 102 mit einer weiteren Verteilervorrichtung 108 eines weiteren Brennstoffzellenmoduls 106 verbunden ist. Mittels der unteren Kanäle 112 der weiteren Verteilervorrichtung 108 des weiteren Brennstoffzellenmoduls 106 ist der Kathode 120 der Oxidator zum Betrieb der Hochtemperatur-Brennstoffzellenvorrichtung 102 zuführbar.

Die vorstehend beschriebene Hochtemperatur-Brennstoffzellenvorrichtung 102 funktioniert wie folgt:
Mittels der Verteilervorrichtungen 108 der Hochtemperatur-Brennstoffzellenvorrichtung 102 wird dem Stack 104 aus Brennstoffzellenmodulen 106 Brennstoff und Oxidator zugeführt.

Der Brennstoff wird mittels der oberen Kanäle 110 der Verteilervorrichtung 108 verteilt und tritt durch das fluiddurchlässige Trägersubstrat 114 hindurch zu der Anode 116.

Mittels der unteren Kanäle 112 der Verteilervorrichtung 108 wird der Oxidator, insbesondere Luft, über das jeweilige Brennstoffzellenmodul 106 verteilt und steht damit in Kontakt mit der Kathode 120.

Im Bereich der Elektrolytschicht 118 zwischen der Anode 116 und der Kathode 120 reagieren der Brennstoff und der Oxidator miteinander, wobei Sauerstoffionen (durch die Zwischenschicht 119 hindurch) mittels der Elektrolytschicht 118 von der Kathode 120 zu der Anode 116 geleitet werden, wodurch eine Spannung zwischen der Kathode 120 und der Anode 116 entsteht.

Da die Elektrolytschicht 118 elektronisch nicht leitend ist, bleibt diese Spannung zwischen der Kathode 120 und der Anode 116 erhalten. Durch die Vielzahl von Brennstoffzellenmodulen 106 in dem Stack 104 der Hochtemperatur-Brennstoffzellenvorrichtung 102 summiert sich die jeweils zwischen der Anode 116 und der Kathode 120 erzeugte Spannung zu einer Gesamtspannung, welche zum Betrieb eines elektrischen Geräts verwendet werden kann.

Wesentlich für den Betrieb der Hochtemperatur-Brennstoffzellenvorrichtung 102 und insbesondere für die Langzeitstabilität derselben, ist die Ausgestaltung des Trägersubstrats 114.

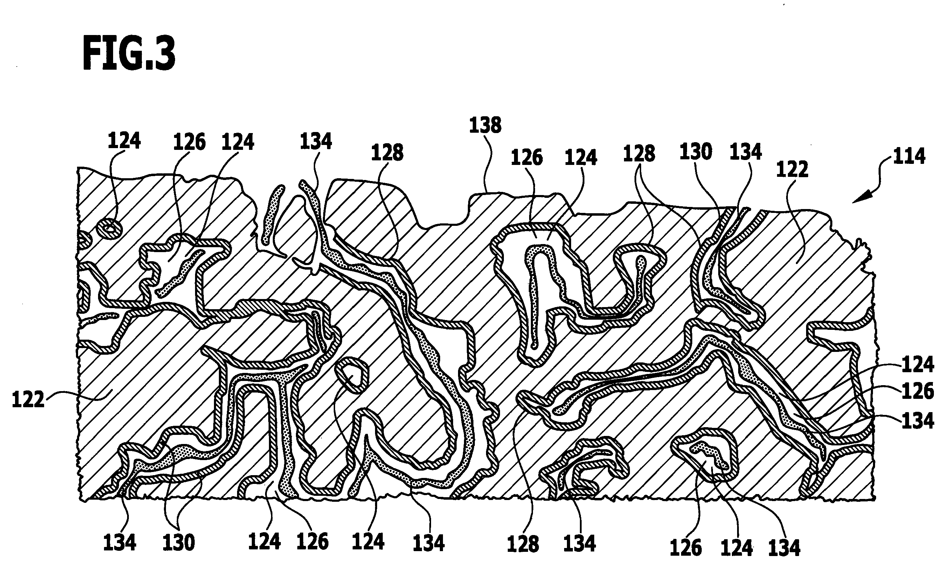

In Figur 3 ist eine schematische Schnittdarstellung des Trägersubstrats 114 gezeigt, welches ein Trägermaterial 122 umfasst und offenporig und fluiddurchlässig ausgebildet ist.

Durch Poren 124 in dem Trägermaterial 122 des Trägersubstrats 114 sind Hohlräume 126 in dem Trägermaterial 122 des Trägersubstrats 114 gebildet. Dies ermöglicht einerseits die Fluiddurchlässigkeit des Trägersubstrats 114. Andererseits erhöht dies die Oberfläche des Trägersubstrats 114 erheblich, so dass das Trägersubstrat 114 im Betrieb der elektrochemischen Einrichtung 100 thermisch und chemisch stark belastet wird.

Um diese Belastung des Trägersubstrats 114, insbesondere des Trägermaterials 122, zu reduzieren, ist eine innere Oberfläche 128 des Trägermaterials 122, welche die Hohlräume 126 des Trägermaterials 122 begrenzt, mit einer Schutzschicht 130 versehen.

Die Schutzschicht 130 wird als solche auf der inneren Oberfläche 128 des Trägermaterials 122 angeordnet oder durch chemische Reaktion, insbesondere Oxidation, des Trägermaterials 122 gebildet.

Das Trägermaterial 122 ist somit als innenbeschichtetes Trägermaterial 122 ausgebildet.

Als Materialien für eine Schutzschicht 130 können insbesondere keramische Werkstoffe, beispielsweise Aluminiumoxid (Al₂O₃), verwendet werden. Diese können beispielsweise direkt auf die innere Oberfläche 128 des Trägermaterials 122 aufgebracht werden.

Alternativ hierzu kann jedoch auch vorgesehen sein, dass das Trägermaterial 122 beispielsweise Aluminium umfasst, welches sich mit Sauerstoff in Aluminiumoxid (Al₂O₃) umwandelt, um die Schutzschicht 130 zu bilden.

Für einen optimalen Betrieb der Hochtemperatur-Brennstoffzellenvorrichtung 102 muss das Trägersubstrat 114 eine möglichst hohe Elektronenleitfähigkeit aufweisen.

Durch die Verwendung einer Schutzschicht 130 kann die Fähigkeit des Trägersubstrats 114, Elektronen zu leiten, beeinträchtigt werden.

Wie Figur 3 zu entnehmen ist, ist das Trägersubstrat 114 daher mit einer elektronenleitfähigen Struktur 134 versehen, welche sich innerhalb der Hohlräume 126 des Trägermaterials 122 erstreckt.

Die elektronenleitfähige Struktur 134 behindert ein Durchströmen des Trägersubstrats 114 dabei vorzugsweise nicht oder nur unwesentlich, ermöglicht jedoch die Weiterleitung von Elektronen von der im montierten Zustand der Hochtemperatur-Brennstoffzellenvorrichtung 102 der Verteilervorrichtung 108 zugewandten, in Figur 2 unteren Außenseite 136 zu der dieser Außenseite 136 gegenüberliegenden, im montierten Zustand der Hochtemperatur-Brennstoffzellenvorrichtung 102 der Anode 116 zugewandten Außenseite 138 des Trägersubstrats 114 und umgekehrt.

Die elektronenleitfähige Struktur 134 ist dabei vorzugsweise eine im Wesentlichen zusammenhängende Struktur, welche sich von der einen Außenseite 136 des Trägersubstrats 114 zu der dieser Außenseite 136 gegenüberliegenden Außenseite 138 des Trägersubstrats 114 erstreckt.

In Abhängigkeit von der Materialwahl für das Trägermaterial 122, die Schutzschicht 130 und die elektronenleitfähige Struktur 134 können sich selbstverständlich unterschiedliche Formen und Dimensionen für die Poren 124, die Hohlräume 126, die Schutzschicht 130 und/oder die elektronenleitfähige Struktur 134 ergeben.

Beispielsweise könnte durch die Wahl eines Metallschaums als Trägermaterial 122 ein Trägersubstrat 114 mit dem in Figur 3 dargestellten Querschnitt erhalten werden.

Insbesondere bei der Verwendung von Sinterwerkstoffen ist beispielsweise ein Trägersubstrat 114 herstellbar, welches die in Figur 5 schematisch dargestellte Struktur aufweist.

Ein Trägersubstrat 114 kann beispielsweise wie folgt hergestellt werden:
Als Trägermaterial 122 wird eine Eisen-Chrom-Aluminium-Yttrium-Legierung gewählt. Das Trägermaterial 122 weist dabei eine offenporige, körnige Struktur auf und ist fluiddurchlässig.

Das Trägermaterial 122 wird zunächst in einer Luftatmosphäre auf ungefähr 1000°C erhitzt, so dass sich aus dem Aluminium in dem Trägermaterial 122 an der inneren Oberfläche 128 des Trägermaterials 122 eine dünne Schutzschicht 130 aus Aluminiumoxid bildet.

Insbesondere werden hierdurch die körnigen Bausteine des Trägermaterials 122 mit einer Aluminiumoxid-Umhüllung versehen, welche die Schutzschicht 130 bildet (siehe Figur 5).

In einem nächsten Schritt werden die Hohlräume 126 in dem Trägermaterial 122 mit einem geeigneten Füllmaterial gefüllt. Beispielsweise werden die Hohlräume 126 teilweise oder vollständig mit einer Schlämme (slurry) aus einem elektronisch leitenden Material gefüllt, welches als elektronenleitfähige Struktur 134 dient.

Das elektronische leitende Material kann beispielsweise ein keramisches Material, insbesondere Lanthan-Strontium-Chrom-Manganat oder Lanthan-Strontium-Titanat, sein.

Während dieser Durchtränkung des Trägermaterials 122 mit der Schlämme ist das Trägermaterial 122 vorzugsweise auf einer ebenen Unterlage, insbesondere auf einer Unterlage aus Glas, angeordnet. Hierdurch kann eine besonders eben ausgebildete Außenseite 136, 138 des Trägermaterials 122 hergestellt werden.

Auf diese ebene Außenseite 136, 138 können dann weitere Schichten in nachfolgenden Schritten aufgebracht werden.

Das Trägermaterial 122 wird dann zusammen mit dem in den Hohlräumen 126 angeordneten Füllmaterial erhitzt, um das Bindemittel in der Schlämme zu entfernen und die mechanische Stabilität der elektronenleitfähigen Struktur 134 zu erhöhen.

Das Trägersubstrat 114 wird hierdurch wieder fluiddurchlässig.

In weiteren Schritten wird eine ungefähr 20 bis 30 µm dicke aktive Anode 116 auf das Trägersubstrat 114 aufgebracht. Dies kann beispielsweise durch Aufsprühen einer kolloidalen Suspension oder in einem Siebdruckverfahren geschehen, wobei eine Korngröße vorzugsweise kleiner als 1 µm ist.

Vorzugsweise ist die Oberfläche der Anode 116 eben und gleichmäßig, so dass eine ebenfalls ebene und gleichmäßige Elektrolytschicht 118 darauf angeordnet werden kann.

Die Elektrolytschicht 118 wird vorzugsweise so dünn wie möglich ausgebildet. Beispielsweise beträgt deren Dicke weniger als 10 µm, vorzugsweise zwischen ungefähr 1 µm und ungefähr 5 µm. Dies kann durch Sprühen einer kolloidalen Suspension, durch Siebdruck oder durch chemische Prozesse wie Sol-Gel-Verfahren erzielt werden.

Die aus dem Trägersubstrat 114, der Anode 116 und der Elektrolytschicht 118 bestehende Halbzelle wird dann in einer geeigneten Atmosphäre gesintert, um die Schichten in ihre jeweils endgültige Form zu überführen. Als Sinteratmosphäre kann beispielsweise Argon (neutrale Atmosphäre) oder eine Mischung aus Argon und Wasserstoff oder sogar reiner Wasserstoff (reduzierende Atmosphäre) verwendet werden.

Auf die Elektrolytschicht 118 wird vorzugsweise eine Zwischenschicht 119 aufgebracht, welche beispielsweise als dünne Zwischenschicht 119 aus einem Gadoliniumoxid dotierten Ceroxid (GDC) gebildet ist. Die Zwischenschicht 119 wird insbesondere in einem Elektronenstrahl-Physical Vapor Deposition-Verfahren (EB-PVD), einem Sputter-Verfahren oder einem Sol-Gel-Verfahren aufgebracht.

Auf die Zwischenschicht 119 wird die Kathode 120 aufgebracht. Die Kathode 120 kann dabei einerseits durch Sprühen einer kolloidalen Suspension unter Verwendung von Nanopartikeln aus LSCF aufgebracht und bei relativ niedrigen Temperaturen von ungefähr 1000°C gesintert werden.

Andererseits kann die Kathode 120 durch thermisches Sprühen aufgebracht werden. Ein zusätzlicher Sinterschritt ist dann vorzugsweise entbehrlich.

In einem letzten Schritt werden geeignete Katalysatormaterialien in die Anode 116 und/oder in die Kathode 120 eingebracht, bevor das Trägersubstrat 114 samt der darauf angeordneten Anode 116, der Elektrolytschicht 118, der Zwischenschicht 119 und der Kathode 120 in einer Hochtemperatur-Brennstoffzellenvorrichtung 102 Verwendung findet.

Durch die Verwendung einer elektronenleitfähigen Struktur 134 in dem Trägersubstrat 114 weist das Trägersubstrat 114 eine hohe Elektronenleitfähigkeit auf, so dass die Hochtemperatur-Brennstoffzellenvorrichtung aufgrund geringer Verluste effizient betrieben werden kann.

### Bezugszeichenliste

- 100: elektrochemische Einrichtung
- 102: Hochtemperatur-Brennstoffzellenvorrichtung
- 104: Stack
- 106: Brennstoffzellenmodul
- 108: Verteilervorrichtung
- 110: oberer Kanal
- 112: unterer Kanal
- 114: Trägersubstrat
- 116: Anode
- 118: Elektrolytschicht
- 119: Zwischenschicht
- 120: Kathode
- 122: Trägermaterial
- 124: Poren
- 126: Hohlraum
- 128: innere Oberfläche
- 130: Schutzschicht
- 134: elektronenleitfähige Struktur
- 136: Außenseite
- 138: Außenseite
- I: Bereich

## Patentansprüche

1. Verfahren zur Herstellung eines Trägersubstrats (114) für eine Hochtemperatur-Elektrolytschicht (118), umfassend Folgendes:
- Herstellen eines offenporigen und fluiddurchlässigen Trägermaterials (122), dessen Poren (124) mindestens einen Hohlraum (126) in dem Trägermaterial (122) bilden, wobei das Trägermaterial (122) Aluminium umfasst;
- Herstellen einer Schutzschicht (130) an einer den mindestens einen Hohlraum (126) begrenzenden inneren Oberfläche (128) des Trägermaterials (122), wobei die Schutzschicht (130) aus Aluminiumoxid gebildet ist;
- Herstellen einer elektronenleitfähigen Struktur (134), welche sich innerhalb des mindestens einen Hohlraums (126) des Trägermaterials (122) erstreckt, wobei die elektronenleitfähige Struktur (134) dadurch hergestellt wird, dass der mindestens eine Hohlraum (126) in dem Trägermaterial (122) zumindest teilweise mit einem Füllmaterial gefüllt wird und dass das Trägermaterial (122) anschließend zusammen mit dem Füllmaterial erhitzt wird.

2. Verfahren nach Anspruch 1, **dadurch gekennzeichnet, dass** das Trägermaterial (122) ein oxidbildendes Material ist und dass die Schutzschicht (130) an der den mindestens einen Hohlraum (126) begrenzenden inneren Oberfläche (128) des Trägermaterials (122) durch oberflächliche Oxidation des Trägermaterials (122) hergestellt wird.

3. Verfahren nach einem der Ansprüche 1 oder 2, **dadurch gekennzeichnet, dass** die Schutzschicht (130) vor der Herstellung der elektronenleitfähigen Struktur (134) hergestellt wird.

4. Verfahren nach einem der Ansprüche 1 bis 3, **dadurch gekennzeichnet, dass** die elektronenleitfähige Struktur (134) ein keramisches Material umfasst oder aus einem keramischen Material gebildet ist.

5. Verfahren nach Anspruch 4, **dadurch gekennzeichnet, dass** das keramische Material Lanthan-Strontium-Chrom-Manganat (LSCM) und/oder Lanthan-Strontium-Titanat (LST) umfasst oder aus Lanthan-Strontium-Chrom-Manganat (LSCM) oder Lanthan-Strontium-Titanat (LST) gebildet ist.

6. Verfahren nach einem der Ansprüche 1 bis 5, **dadurch gekennzeichnet, dass** das Trägersubstrat (114)
- vor der Herstellung, nach der Herstellung und/oder zur Herstellung des offenporigen und fluiddurchlässigen Trägermaterials (122),
- vor der Herstellung, nach der Herstellung und/oder zur Herstellung der Schutzschicht (130) und/oder
- vor der Herstellung, nach der Herstellung und/oder zur Herstellung der elektronenleitfähigen Struktur (134)
gesintert wird.

7. Trägersubstrat (114) für eine Hochtemperatur-Elektrolytschicht (118), umfassend ein Trägermaterial (122), welches offenporig und fluiddurchlässig ausgebildet ist und Aluminium umfasst,
wobei durch Poren (124) des Trägermaterials (122) mindestens ein Hohlraum (126) in dem Trägermaterial (122) gebildet ist,
wobei das Trägermaterial (122) ein innenbeschichtetes Trägermaterial (122) ist, bei welchem eine den mindestens einen Hohlraum (126) begrenzende innere Oberfläche (128) des Trägermaterials (122) mit einer aus Aluminiumoxid gebildeten Schutzschicht (130) versehen ist, und
wobei das Trägersubstrat (114) eine elektronenleitfähige Struktur (134) umfasst, welche sich innerhalb des mindestens einen Hohlraums (126) des Trägermaterials (122) erstreckt, wobei die elektronenleitfähige Struktur (134) dadurch hergestellt ist, dass der mindestens eine Hohlraum (126) in dem Trägermaterial (122) zumindest teilweise mit einem Füllmaterial gefüllt wird und dass das Trägermaterial (122) anschließend zusammen mit dem Füllmaterial erhitzt wird.

8. Trägersubstrat (114) nach Anspruch 7, **dadurch gekennzeichnet, dass** die elektronenleitfähige Struktur (134) eine im Wesentlichen zusammenhängende Struktur ist, mittels welcher Elektronen von einer ersten Außenseite (136) des Trägersubstrats (114) zu einer der ersten Außenseite (136) gegenüberliegenden zweiten Außenseite (138) des Trägersubstrats (114) leitbar sind.

9. Trägersubstrat (114) nach einem der Ansprüche 7 oder 8, **dadurch gekennzeichnet, dass** das Trägersubstrat (114) durch den mindestens einen Hohlraum (126) hindurch und/oder längs der elektronenleitfähigen Struktur (134) von einer ersten Außenseite (136) des Trägersubstrats (114) zu einer der ersten Außenseite (136) gegenüberliegenden zweiten Außenseite (138) des Trägersubstrats (114) mit einem Fluid durchströmbar ist.

10. Trägersubstrat (114) nach einem der Ansprüche 7 bis 9, **dadurch gekennzeichnet, dass** der thermische Expansionskoeffizient des Trägermaterials (122), der thermische Expansionskoeffizient der Schutzschicht (130) und/oder der thermische Expansionskoeffizient der elektronenleitfähigen Struktur (134) zumindest näherungsweise identisch sind.

11. Elektrochemische Einrichtung (100), umfassend mindestens ein Trägersubstrat (114) nach einem der Ansprüche 7 bis 10.

12. Elektrochemische Einrichtung (100) nach Anspruch 11, **dadurch gekennzeichnet, dass** das Trägersubstrat (114) auf einer Außenseite (136) desselben mit einer Schicht (116) versehen ist, welche im Wesentlichen aus demselben Material gebildet ist wie die elektronenleitfähige Struktur (134) des Trägersubstrats (114).

13. Elektrochemische Einrichtung (100) nach einem der Ansprüche 11 oder 12, **dadurch gekennzeichnet, dass** die elektrochemische Einrichtung (100) als eine Hochtemperatur-Brennstoffzellenvorrichtung (102) ausgebildet ist.

## Claims

1. A method for producing a carrier substrate (114) for a high-temperature electrolyte layer (118), including the following:
- producing an open-pore, fluid-permeable carrier material (122) whereof the pores (124) form at least one cavity (126) in the carrier material (122), wherein the carrier material (122) includes aluminium;
- producing a protective layer (130) on an inner surface (128) of the carrier material (122) that delimits the at least one cavity (126), wherein the protective layer (130) is formed from aluminium oxide;
- producing an electron-conductive structure (134) that extends within the at least one cavity (126) in the carrier material (122), wherein the electron-conductive structure (134) is produced in that the at least one cavity (126) in the carrier material (122) is at least partly filled with a filling material, and in that the carrier material (122) is then heated together with the filling material.

2. A method according to Claim 1, **characterised in that** the carrier material (122) is an oxide-forming material, and **in that** the protective layer (130) on the inner surface (128) of the carrier material (122) that delimits the at least one cavity (126) is produced by surface oxidation of the carrier material (122).

3. A method according to one of Claims 1 or 2, **characterised in that** the protective layer (130) is produced before the electron-conductive structure (134) is produced.

4. A method according to one of Claims 1 to 3, **characterised in that** the electron-conductive structure (134) includes a ceramic material or is formed from a ceramic material.

5. A method according to Claim 4, **characterised in that** the ceramic material includes lanthanum strontium chromium manganate (LSCM) and/or lanthanum strontium titanate (LST), or is formed from lanthanum strontium chromium manganate (LSCM) or lanthanum strontium titanate (LST).

6. A method according to one of Claims 1 to 5, **characterised in that** the carrier substrate (114) is sintered
- before producing, after producing and/or at the time of producing the open-pore, fluid-permeable carrier material (122),
- before producing, after producing and/or at the time of producing the protective layer (130), and/or
- before producing, after producing and/or at the time of producing the electron-conductive structure (134).

7. A carrier substrate (113) for a high-temperature electrolyte layer (118), including a carrier material (122) that has an open-pore and fluid-permeable form and includes aluminium,
wherein at least one cavity (126) is formed in the carrier material (122) by pores (124) of the carrier material (122),
wherein the carrier material (122) is an internally coated carrier material (122) in which an inner surface (128) of the carrier material (122) that delimits the at least one cavity (126) is provided with a protective layer (130) formed from aluminium oxide, and
wherein the carrier substrate (114) includes an electron-conductive structure (134) that extends within the at least one cavity (126) in the carrier material (122), wherein the electron-conductive structure (134) is produced in that the at least one cavity (126) in the carrier material (122) is at least partly filled with a filling material, and in that the carrier material (122) is then heated together with the filling material.

8. A carrier substrate (114) according to Claim 7, **characterised in that** the electron-conducting structure (134) is a substantially cohesive structure by means of which electrons are conductible from a first outer side (136) of the carrier substrate (114) to a second outer side (138) of the carrier substrate (114) that is opposite the first outer side (136).

9. A carrier substrate (114) according to one of Claims 7 or 8, **characterised in that** a fluid is flowable through the carrier substrate (114), through the at least one cavity (126) and/or along the electron-conductive structure (134), from a first outer side (136) of the carrier substrate (114) to a second outer side (138) of the carrier substrate (114) that is opposite the first outer side (136).

10. A carrier substrate (114) according to one of Claims 7 to 9, **characterised in that** the thermal expansion coefficient of the carrier material (122), the thermal expansion coefficient of the protective layer (130) and/or the thermal expansion coefficient of the electron-conductive structure (134) are at least approximately identical.

11. An electrochemical device (100), including at least one carrier substrate (114) according to one of Claims 7 to 10.

12. An electrochemical device (100) according to Claim 11, **characterised in that** the carrier substrate (114) is provided on an outer side (136) thereof with a layer (116) which is formed substantially from the same material as the electron-conductive structure (134) of the carrier substrate (114).

13. An electrochemical device (100) according to one of Claims 11 or 12, **characterised in that** the electrochemical device (100) has the form of a high-temperature fuel cell arrangement (102).

## Revendications

1. Procédé de fabrication d'un substrat de support (114) pour une couche d'électrolyte haute température (118), comprenant les étapes suivantes :
- la fabrication d'un matériau de support (122) ayant des pores ouverts et perméable aux fluides, dont les pores (124) forment au moins une cavité (126) dans le matériau de support (122), dans lequel le matériau de support (122) comprend de l'aluminium ;
- la fabrication d'une couche protectrice (130) au niveau d'une surface interne (128) du matériau de support (122), délimitant la au moins une cavité (126), dans lequel la couche protectrice (130) est formée à partir d'oxyde d'aluminium ;
- la fabrication d'une structure conductrice d'électrons (134), qui s'étend à l'intérieur de la au moins une cavité (126) du matériau de support (122), dans lequel la structure conductrice d'électrons (134) est fabriquée en remplissant la au moins une cavité (126) dans le matériau de support (122) au moins partiellement avec une matière de remplissage et en chauffant ensuite le matériau de support (122) conjointement avec la matière de remplissage.

2. Procédé selon la revendication 1, **caractérisé en ce que** le matériau de support (122) est un matériau formant des oxydes et **en ce que** la couche protectrice (130) est fabriquée sur la surface interne (128) du matériau de support (122), délimitant la au moins une cavité (126), par oxydation superficielle du matériau de support (122).

3. Procédé selon l'une des revendications 1 ou 2, **caractérisé en ce que** la couche protectrice (130) est fabriquée avant la fabrication de la structure conductrice d'électrons (134).

4. Procédé selon l'une des revendications 1 à 3, **caractérisé en ce que** la structure conductrice d'électrons (134) comprend un matériau céramique ou est formée à partir d'un matériau céramique.

5. Procédé selon la revendication 4, **caractérisé en ce que** le matériau céramique comprend du lanthane - strontium - chrome - manganate (LSCM) et/ou du lanthane - strontium - titanate (LST) ou est formé à partir de lanthane - strontium - chrome - manganate (LSCM) et/ou de lanthane - strontium - titanate (LST).

6. Procédé selon l'une des revendications 1 à 5, **caractérisé en ce que** le substrat de support (114) est fritté
- avant la fabrication, après la fabrication et/ou pour la fabrication du matériau de support (122) ayant des pores ouverts et perméable aux fluides,
- avant la fabrication, après la fabrication et/ou pour la fabrication de la couche protectrice (130) et/ou
- avant la fabrication, après la fabrication et/ou pour la fabrication de la structure conductrice d'électrons (134).

7. Substrat de support (114) pour une couche d'électrolyte haute température (118), comprenant un matériau de support (122) qui est conçu pour être pourvu de pores ouverts et perméable aux fluides et comprend de l'aluminium,
dans lequel les pores (124) du matériau de support (122) permettent de former au moins une cavité (126) dans le matériau de support (122), dans lequel le matériau de support (122) est un matériau de support (122) revêtu à l'intérieur, dans lequel une surface interne (128) du matériau de support (122), délimitant la au moins une cavité (126), est pourvue d'une couche protectrice (130) formée à partir d'oxyde d'aluminium, et
dans lequel le substrat de support (114) comprend une structure conductrice d'électrons (134) qui s'étend à l'intérieur de la au moins une cavité (126) du matériau de support (122), dans lequel la structure conductrice d'électrons (134) est fabriquée en remplissant la au moins une cavité (126) dans le matériau de support (122) au moins partiellement avec une matière de remplissage et en chauffant ensuite le matériau de support (122) conjointement avec la matière de remplissage.

8. Substrat de support (114) selon la revendication 7, **caractérisé en ce que** la structure conductrice d'électrons (134) est une structure sensiblement cohésive, au moyen de laquelle des électrons peuvent être conduits depuis une première face externe (136) du substrat de support (114) jusqu'à une deuxième face externe (138) du substrat de support (114), opposée à la première face externe (136).

9. Substrat de support (114) selon l'une des revendications 7 ou 8, **caractérisé en ce que** le substrat de support (114) peut être traversé par un fluide en passant par la au moins une cavité (126) et/ou le long de la structure conductrice d'électrons (134) depuis une première face externe (136) du substrat de support (114) jusqu'à une deuxième face externe (138) du substrat de support (114), opposée à la première face externe (136).

10. Substrat de support (114) selon l'une des revendications 7 à 9, **caractérisé en ce que** le coefficient de dilatation thermique du matériau de support (122), le coefficient de dilatation thermique de la couche protectrice (130) et/ou le coefficient de dilatation thermique de la structure conductrice d'électrons (134) sont au moins approximativement identiques.

11. Dispositif électrochimique (100), comprenant au moins un substrat de support (114) selon l'une des revendications 7 à 10.

12. Dispositif électrochimique (100) selon la revendication 11, **caractérisé en ce que** le substrat de support (114) est pourvu sur une face externe (136) de celui-ci d'une couche (116) qui est formée essentiellement à partir du même matériau que la structure conductrice d'électrons (134) du substrat de support (114).

13. Dispositif électrochimique (100) selon l'une des revendications 11 ou 12, **caractérisé en ce que** le dispositif électrochimique (100) est conçu sous la forme d'un dispositif de pile à combustible haute température (102).
